# EUROPEAN PATENT SPECIFICATION

(11) **EP 2 240 989 B1**
(45) Date of publication and mention of the grant of the patent: **03.12.2014**
(21) Application number: 09700870.0
(22) Date of filing: 09.01.2009
(51) Int. Cl.: H02G 3/12

(54) **RELEASABLE LOCK FOR ELECTRICAL INSTALLATION EQUIPMENT**
LÖSBARE VERRIEGELUNG FÜR ELEKTRISCHE INSTALLATIONSGERÄTE
VERROU AMOVIBLE POUR EQUIPEMENT D'INSTALLATION ELECTRIQUE

(30) Priority: 11.01.2008 DK 200800041
(43) Date of publication of application: 20.10.2010
(73) Proprietor: Schneider Electric Industries SAS, 92500 Rueil-Malmaison (FR)
(72) Inventor: TOREKOV, Rasmus, Kaastrup, DK-2400 Copenhagen NV (DK); CLAUSEN, Nicolai, Alexander, DK-2100 Copenhagen Ø (DK)
(74) Representative: Groth & Co. KB
(86) International application number: PCT/DK2009/000004
(87) International publication number: WO 2009/086833

(56) References cited:
- WO-A-02/37633
- DE-U1- 20 001 343

## Description

The invention relates to a releasable lock for electrical installation equipment, eg a power socket (1), which comprises a fore front, and a resilient locking beak (5, 6) for cooperation with a pair of opposing walls (13, 14) that extend transversally of the fore front in a duct (4) for receiving the installation equipment, wherein the resilient locking beak (5, 6) is movable in a direction essentially in parallel with said fore front between a locking position and a released position, wherein the locking beaks cooperate and do not cooperate, respectively, with the opposing sidewalls; and wherein arresting means are provided that are coherent with the respective locking beaks for counteracting the spring force of the locking beak in the released position of the lock.

A lock of that kind is known eg from DE 200 01 343 U1 and FR 2 816 770. In recent years, electrical installation equipment has undergone a rapid development towards more efficient work procedures, such as at least partial prefabrication. However, that also increases the need for being able to make changes to the installation which, in turn, increases the risk of correction of errors having to be made. Each time changes have to be made/errors have to be corrected, the electrical installation equipment must be removed from the duct in which it is mounted. It is well-known that, often, it is a problem to remove the electrical installation equipment from an associated duct; and that problem has greatly increased after it has become common to interconnect eg a number of power sockets in succession of each other by means of jumpers.

As an example of electrical installation equipment, one (or more interconnected) power socket(s) will be mentioned in the following; it being emphasized, however, that the invention is not limited to precisely that type of installation equipment. Typically, a power socket comprises two or four locking beaks that are resilient and configured for engaging with projections/cut-outs in walls in the duct. The invention specifically relates to a novel construction for such locking means.

The prior art can be divided into mere friction means without locking beaks (see eg EP 0 677 906 A1) and resilient locking beaks with a mere click function and locking beaks which, by means of friction, can be arrested in a released position. The drawback of the mere click function is that, typically, to remove the power socket, four or more locking arms are to be held back at the same time which is impossible in practice. It is not impossible to influence two locking arms simultaneously and to remove a power socket when space conditions are good; but situations also occur when there is not room enough to do so.

By the known locking beaks with frictional release where a locking arm may be pulled out of engagement and where, as a consequence of friction, it may remain in released position, a number of drawbacks also come about, often leading to the equipment becoming damaged. The major drawback of the friction lock for the locking arm is that the power socket cannot be mounted in one work procedure, since each individual lock is to be influenced to enter into engagement. This entails a slow and work-intensive mounting procedure. A further major drawback is that, often, the locking beaks are left in released position with ensuing problems to the end user. Moreover, the friction lock is tolerance sensitive, and therefore the lock is often made with so much friction that it is difficult to release, meaning that the equipment is often damaged.

An additional challenge is to be able to manufacture the locking means in practice when the electrical installation equipment is small. Makes are available where the modular dimensions of the electrical installation equipment are as small as 45 by 45 mm.

It is the object of the invention to provide a novel lock for electrical installation equipment which has a distinctive click function separately for each lock, whereby it is possible to release the locks individually to the effect that it is possible, with very little manual interference, to release the electrical installation equipment without an ensuing risk of damaging it, irrespective of the number of locks partaking therein.

This object is accomplished by the arresting means comprising a blocking arm which, in the locking position, extends behind the sides of opposing walls that face away from each other and which, in the released position, abut on the sides of the opposing walls that face towards each other, whereby the spring force of the locking beaks is counteracted to the effect that the locking beaks are kept out of engagement with the opposing walls.

The invention accomplishes both the advantages of swift mounting (known from resilient locking beaks) and the advantages of persistent, individual release (known from the locking beak with friction lock) without exhibiting the described drawbacks of the prior art.

By this technique according to the invention, the function of the arresting means is not based on friction; rather it is based on a well-defined, direct transfer of the spring forces of the lock to a wall. Thereby, the locking arm is very easy to operate, emits a well-defined click and ensures a stable functioning.

The blocking arm may be connected to the locking beak in various ways, but preferably it extends from the locking arm somewhere between the free end of the locking beak, its opposite end being strung within the installation equipment. Preferably, the blocking arm is resilient.

By a preferred embodiment, the locking beak cooperates with the lower edge of the side walls, and preferably the lower edges of the sidewalls are coherent with a number of respective locking walls. The locking walls may extend askew relative to the front of the duct, at such angle that a self-retaining effect is accomplished; but preferably the locking wall is essentially in parallel with the front of the duct.

By the blocking arm extending, in the locking position, above and past a respective sidewall, movability or a clearance for the locking beak is accomplished which corresponds essentially to the distance between the sidewalls. In the released position, ie immediately prior to the installation equipment being taken out, each blocking arm may thus abut on the internal side of a wall; and in pace with the power socket being removed from the duct, the blocking arm comes along, upwards along the side wall from where it is first released when the locking beak is released and is able to slide upwards.

By a preferred embodiment the blocking arm is, in the locking position, resiliently biased against the upper edge of a sidewall to the effect that the free end of the blocking arm can be caused to abut on the internal face of the sidewall when the free end of the locking arm is influenced for releasing the locking beak from the locking wall. Thereby, both a distinctive click and increased operational reliability are accomplished when the power socket is to be removed. That effect can be further enhanced by the free end of the locking arm extending askew downwards towards a plane that contains the locking walls.

It is a very common drawback of the prior art that, due to inconvenient locking means, it often appears with a fine design which is unfortunately tom at the edges by screwdrivers and other tools that have been used in the attempt to remove the socket. Such added problems are also obviated by the lock according to the invention.

The invention will now be explained in further detail with reference to the following description of an embodiment; reference being made to the drawing, wherein
Figure 1 is a sectional view through a power socket prior to deployment thereof in a duct;
Figure 2 shows the power socket in an intermediate position;
Figure 3 shows the power socket in mounted position;
Figure 4 illustrates release of the power socket from the duct, while
Figures 5 and 6 are perspective views of the locking means of figures 1 through 4 in the locking position and the released position, respectively.

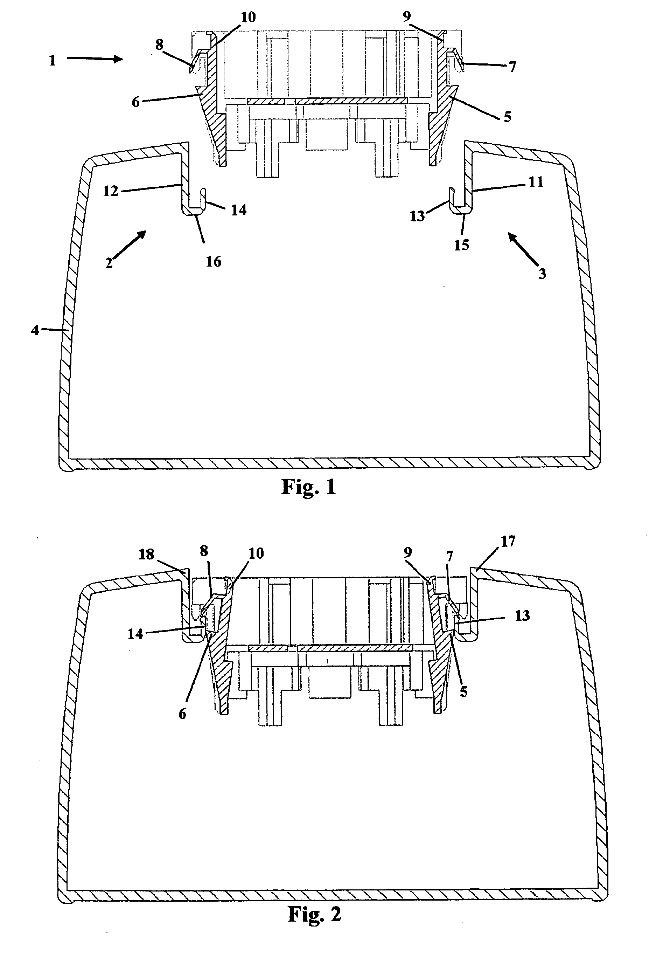

Figure 1 is a sectional view through a power socket 1 for being arranged in a duct 4. As an example a power socket 1 is chosen, but it may by any other kind of electrical installation equipment which is intended for being secured in a duct. In particular, the invention solves the problem that arises in connection with dismounting of the electrical installation equipment, today's building methods entailing that now it is necessary to more frequently remove the equipment again for correction of errors or expansion compared to earlier, where it also applies that the equipment is also increasingly interconnected in the longitudinal expanse, eg by means of so-called jumpers. The problems that arise in the context of removal of the installation equipment were described above, in the introductory part.

Typically, the power socket shown in figure 1 comprises four locking arms of which arms 9 and 10 can be seen. It is also an option that more or fewer locking arms are provided, but, in particular, the advantages of the invention increase with an increasing number of locking arms used. Every locking arm has a locking beak 5, 6 whose function will be described in the context of the following figures, and the arms are resilient and strung at the bottom to the effect that the free, upper ends can be moved resiliently.

The duct 4 comprises a pair of profiles 2, 3, where the sidewalls 13, 14 that are situated a distance deeper than the front of the duct are important to the locking function. The other wall parts 11, 12 may be situated in many ways as long as they serve the purpose of supporting the sidewalls 13, 14. By the shown embodiment, the walls 11, 12 are coherent with the sidewalls 13, 14 via locking walls 15, 16 for cooperation with the locking beaks 5, 6.

As will appear from figure 2, the locking arms 9, 10 are resilient and will, when the power socket is pressed partially down into the duct, be pressed inwards towards each other as will appear from figure 2. The outermost edges of the locking beaks 5, 6 abut on the internal faces of the sidewalls 13, 14, whereby the locking arms 9, 10 are pressed against each other. According to the invention, a blocking arm 7, 8 is also provided which is coherent with a locking arm 9, 10. The blocking arms 7, 8 may extend somewhat beyond the sides of the power outlet, but it will, in all circumstances, be clear of the edges 17, 18 of the hole for receiving the power socket in the front side of the duct due to the locking beaks cooperating with the sidewalls 13, 14. At the same time, the blocking arms are so long that they are sure to move in over the sidewalls 13, 14 when the power socket is pressed in place.

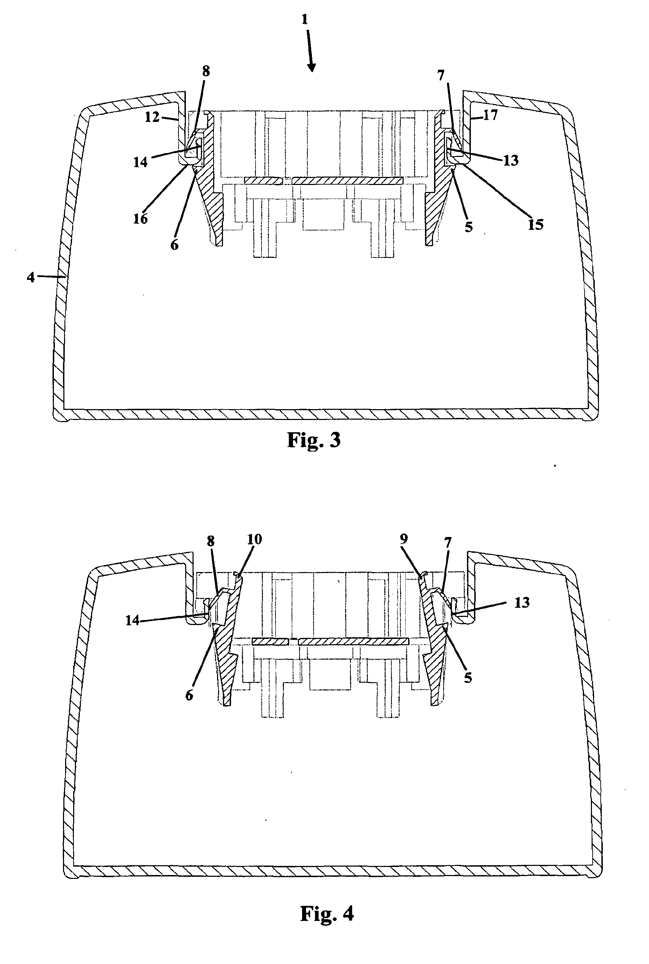

Figure 3 shows the power socket 1 in its mounted position relative to the duct 4. It will now appear that the locking beaks 5, 6 have arrived underneath the sidewalls 13, 14 and abut on a locking wall 15, 16 which, in the shown embodiment, connects the sidewalls 13, 14 to the walls 11, 12. The blocking arms 7, 8 are in relieved position without any function. It is noted that the power socket 1 is prevented from being pressed into the duct by use of means known per se, the sidewalls 13, 14 being receivable between the sides of the power socket and some downwardly projecting flaps that extend between the walls 11, 12 and 13, 14, respectively. The latter means may, in a manner known per se, also comprise various solutions for providing friction against mutual, longitudinal displacement of the power socket and the duct. The locking means according to the invention serve to prevent unintentional pulling of the power socket out of the duct and to enable that the power socket can be moved intentionally from the duct in a manner which is considerably more user-friendly than hitherto known.

When the power socket 1 is to be removed from the duct 4, one sets out by manually influencing the locking arms 9, 10 (and more) individually, see figure 4. When eg the locking arm 9 is influenced towards the left, the blocking arm 7 will first be bent elastically a distance upwards (from the position shown in figure 3), whereby its free end presses against the top edge of the sidewall 13, and when the blocking arm 7 has crossed the sidewall, it will move elastically a distance down the internal side of the sidewall 13 as shown by figure 4. Thereby the locking arm 9 will be retained in released position against the spring force of the locking arm, and that can be done individually for all the locking arms.

Then the power socket 1 can be lifted clear of the duct, ia via an intermediate position of the release, which will also appear from figure 2. When a blocking arm 7, 8 is clear of the top edge of a sidewall 13, 14, the blocking arms are relieved and now they have no function. In turn, the locking arms 9, 10 are kept pressed against each other by the locking beaks 5, 6 sliding up along the sidewalls 13, 14 until, finally, release is accomplished, corresponding to figure 1.

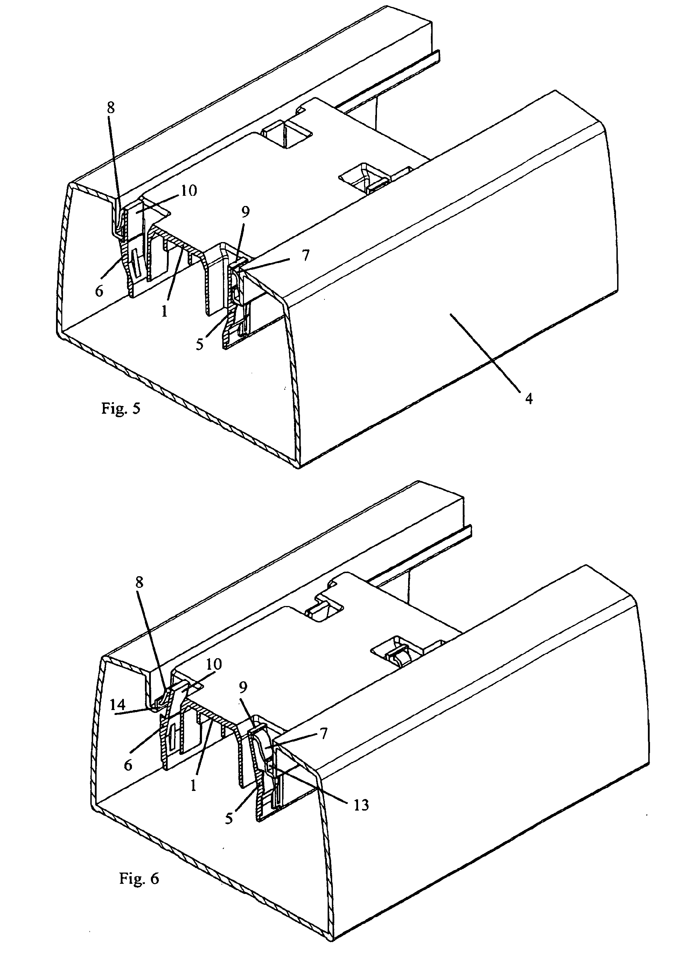

The described function will also appear from figures 5 and 6 that are provided with reference numerals corresponding to the subject-matter shown in figures 1-4. Figure 5 shows the locking position corresponding to figure 3, while figure 6 shows the position corresponding to figure 4, where the locking beaks 5, 6 are released to the effect that the electrical installation equipment can readily be removed. The blocking arms 7, 8 are dimensioned such that a distinct click sounds when the arms slip across the top edge of the walls 13, 14 and around the sides of the walls 13, 14 that face towards each other, where they fixate the locking arm 9, 10 in a position where the locking beaks 5, 6 have disengaged the sidewalls 13, 14.

## Claims

1. A releasable lock for electrical installation equipment, eg a power socket (1), comprising a fore front, and a resilient locking beak (5, 6) for cooperation with a pair of opposing walls (13, 14) that extend transversally of the fore front in a duct (4) for receiving the installation equipment, wherein the resilient locking beak (5, 6) is movable in a direction essentially in parallel with said fore front between a locking position and a released position, wherein the locking beaks cooperate and do not cooperate, respectively, with the opposing sidewalls; and wherein arresting means (7, 8, 9, 10) are provided that are coherent with the respective locking beaks for counteracting the spring force of the locking beak in the released position of the lock, **characterised in that** the arresting means (7, 8, 9, 10) comprise a blocking arm (7, 8) which, in the locking position, extends behind the sides of opposing walls that face away from each other and which, in the released position, abut on the sides of the opposing walls that face towards each other, whereby the spring force of the locking beaks is counteracted to the effect that the locking beaks are kept out of engagement with the opposing walls.

2. A lock according to claim 1, wherein the locking beak (5, 6) is situated on a locking arm (9, 10) at a distance from a strung-in end of the locking arm, **characterised in that** the blocking arm (7, 8) extends from the locking arm (9, 10) somewhere between the locking beak (5, 6) and the free end of the locking arm.

3. A lock according to claim 2, **characterised in that** the blocking arm (7, 8) is resilient.

4. A lock according to claims 1-3, **characterised in that**, in the locking position, the locking beak cooperates with a bottom edge of the sidewalls (13, 14).

5. A lock according to claim 4, **characterised in that** the bottom edge of the sidewalls (13, 14) is coherent with respective locking walls (15, 16) that are essentially in parallel with the front of the duct.

6. A lock according to claims 1-5, **characterised in that**, in the locking position, the blocking arm (7, 8) extends above and past a respective sidewall (13, 14).

7. A lock according to claim 5 or 6, **characterised in that** the free end of the blocking arm extends askew down towards a plane that contains the locking walls (15, 16).

## Patentansprüche

1. Lösbare Verriegelung für elektrische Installationsgeräte, z.B. eine Netzsteckdose (1), die eine Vorderseite und einen belastbaren Verriegelungshaken (5, 6) zum Zusammenwirken mit einem Paar von gegenüberliegenden Wänden (13, 14), die sich transversal von der Vorderseite in einen Kanal (4) zur Aufnahme der Installationsgeräte erstrecken, umfasst, wobei der belastbare Verriegelungshaken (5, 6) in eine Richtung, die im Wesentlichen parallel zu der Vorderseite ist, zwischen einer Verschlussstellung und einer Freigabestellung bewegt werden kann, wobei die Verriegelungshaken jeweils mit den gegenüberliegenden Seitenwänden zusammenwirken oder mit diesen nicht zusammenwirken; und wobei Arretiermittel (7, 8, 9, 10) bereitgestellt sind, die mit den entsprechenden Verriegelungshaken kohärent sind, um der Federkraft des Verriegelungshakens in der Freigabestellung der Verriegelung entgegenzuwirken, **dadurch gekennzeichnet, dass** die Arretiermittel (7, 8, 9, 10) einen Sperrarm (7, 8) umfassen, der sich in der Verschlussstellung hinter die Seiten gegenüberliegender Wände, die voneinander wegzeigen, erstreckt, und der in der Freigabestellung an die Seiten der gegenüberliegenden Wände, die zueinander hinzeigen, angrenzt, wobei der Federkraft der Verriegelungshaken dahingehend entgegengewirkt wird, dass der Verriegelungshaken außer Eingriff mit den gegenüberliegenden Wänden gehalten werden.

2. Verriegelung nach Anspruch 1, wobei der Verriegelungshaken (5, 6) auf einem Verriegelungsarm (9, 10) in einer Entfernung von einem eingespannten Ende des Verriegelungsarms liegt, **dadurch gekennzeichnet, dass** sich der Sperrarm (7, 8) von dem Verriegelungsarm (9, 10) irgendwo zwischen dem Verriegelungshaken (5, 6) und dem freien Ende des Verriegelungsarms erstreckt.

3. Verriegelung nach Anspruch 2, **dadurch gekennzeichnet, dass** der Sperrarm (7, 8) belastbar ist.

4. Verriegelung nach Ansprüchen 1 bis 3, **dadurch gekennzeichnet, dass** der Verriegelungshaken in der Verschlussstellung mit einer unteren Kante der Seitenwände (13, 14) zusammenwirkt.

5. Verriegelung nach Anspruch 4, **dadurch gekennzeichnet, dass** die untere Kante der Seitenwände (13, 14) mit entsprechenden Verriegelungswänden (15, 16), die im Wesentlichen parallel zur Vorderseite des Kanals sind, kohärent ist.

6. Verriegelung nach Ansprüchen 1 bis 5, **dadurch gekennzeichnet, dass** sich der Sperrarm (7, 8) in der Verschlussstellung über und hinter eine entsprechende Seitenwand (13, 14) erstreckt.

7. Verriegelung nach Anspruch 5 oder 6, **dadurch gekennzeichnet, dass** sich das freie Ende des Sperrarms quer nach unten in Richtung einer Ebene erstreckt, die die Verriegelungswände (15, 16) beinhaltet.

## Revendications

1. Dispositif de verrouillage libérable pour un appareil d'installation électrique, par ex. une prise électrique (1), comprenant une partie frontale, et une protubérance de verrouillage élastique (5, 6) destinée à coopérer avec une paire de parois opposées (13, 14) qui s'étendent transversalement vis-à-vis de la partie frontale dans un passage (4) destiné à recevoir l'appareil d'installation, la protubérance de verrouillage élastique (5, 6) étant mobile dans une direction essentiellement parallèle à ladite partie frontale entre une position de verrouillage et une position libérée, dans lesquelles les protubérances de verrouillage coopèrent et ne coopèrent pas, respectivement, avec les parois latérales opposées ; et des moyens d'arrêt (7, 8, 9, 10) étant prévus, lesdits moyens étant formés d'un seul tenant avec les protubérances de verrouillage respectives, afin de neutraliser la force élastique de la protubérance de verrouillage dans la position libérée du dispositif de verrouillage, **caractérisé en ce que** les moyens d'arrêt (7, 8, 9, 10) comprennent un bras de blocage (7, 8) qui, dans la position de verrouillage, s'étend derrière les côtés de parois opposées qui sont orientés dans des directions opposées l'un par rapport à l'autre et qui, dans la position libérée, est en appui sur les côtés des parois opposées qui se trouvent en regard l'un vis-à-vis de l'autre, la force élastique des protubérances de verrouillage étant ainsi neutralisée, ceci ayant pour effet que les protubérances de verrouillage sont maintenues séparées des parois opposées.

2. Dispositif de verrouillage selon la revendication 1, dans lequel la protubérance de verrouillage (5, 6) est située sur un bras de verrouillage (9, 10) à une certaine distance d'une extrémité fixe du bras de verrouillage, **caractérisé en ce que** le bras de blocage (7, 8) s'étend à partir du bras de verrouillage (9, 10) à un endroit situé entre la protubérance de verrouillage (5, 6) et l'extrémité libre du bras de verrouillage.

3. Dispositif de verrouillage selon la revendication 2, **caractérisé en ce que** le bras de blocage (7, 8) est élastique.

4. Dispositif de verrouillage selon les revendications 1 à 3, **caractérisé en ce que**, dans la position de verrouillage, la protubérance de verrouillage coopère avec un bord inférieur des parois latérales (13, 14).

5. Dispositif de verrouillage selon la revendication 4, **caractérisé en ce que** le bord inférieur des parois latérales (13, 14) est formé d'un seul tenant avec des parois de verrouillage respectives (15, 16) qui sont essentiellement parallèles à la partie avant du passage.

6. Dispositif de verrouillage selon les revendications 1 à 5, **caractérisé en ce que**, dans la position de verrouillage, le bras de blocage (7, 8) s'étend au-dessus et au-delà d'une paroi latérale respective (13, 14).

7. Dispositif de verrouillage selon la revendication 5 ou 6, **caractérisé en ce que** l'extrémité libre du bras de blocage s'étend en biais vers le bas en direction d'un plan contenant les parois de verrouillage (15, 16).
